## Europäisches Patentamt

## European Patent Office

## Office européen des brevets

(19)

(11) **EP 1 080 433 B1**

(12) **FASCICULE DE BREVET EUROPEEN**

(45) Date de publication et mention
de la délivrance du brevet:
**12.06.2002 Bulletin 2002/24**

(51) Int Cl.⁷: **H03M 1/10**, G06F 17/40,
H03M 1/00

(21) Numéro de dépôt: **99913051.1**

(22) Date de dépôt: **16.04.1999**

(86) Numéro de dépôt international:
**PCT/CH99/00154**

(87) Numéro de publication internationale:
**WO 99/60496 (25.11.1999 Gazette 1999/47)**

(54) **CIRCUIT ET METHODE POUR CALIBRER LE DEPHASAGE ENTRE UNE PLURALITE DE NUMERISEURS DANS UN SYSTEME D'ACQUISITION DE DONNEES**

SCHALTUNG UND VERFAHREN ZUM KALIBRIEREN DER PHASENABWEICHUNG ZWISCHEN MEHREREN ANALOG-DIGITAL-WANDLERN IN EINEM DATENERFASSUNGSSYSTEM

CIRCUIT AND METHOD FOR CALIBRATING PHASE SHIFT BETWEEN A PLURALITY OF Analog-digital-converter in a DATA ACQUISITION SYSTEM

(84) Etats contractants désignés:
**CH DE FR GB LI**

(30) Priorité: **18.05.1998 EP 98810452**

(43) Date de publication de la demande:
**07.03.2001 Bulletin 2001/10**

(73) Titulaire: **Acqiris**
**1228 Plan-les-Ouates (CH)**

(72) Inventeur: **HUNGERBUEHLER, Viktor**
**CH-1242 Satigny (CH)**

(74) Mandataire: **Saam, Christophe**
**Patents & Technology Surveys SA**
**P.O. Box 1448**
**2001 Neuchâtel (CH)**

(56) Documents cités:
**EP-A- 0 629 966          US-A- 4 736 189**
**US-A- 4 763 105          US-A- 4 962 380**

• **HUBA G: "HIGH-SPEED DATA ACQUISITION WITH SDA 8020 BY DATA SPLITTING" COMPONENTS, vol. 24, no. 6, 1 décembre 1989 (1989-12-01), pages 233-235, XP000095517 ISSN: 0945-1137**

## Description

La présente invention concerne un circuit et une méthode pour calibrer le déphasage entre une pluralité de numériseurs dans un système d'acquisition de données.

On connaît de nombreux types de systèmes d'acquisition de données, par exemple des enregistreurs transitoires et des oscilloscopes numériques, dans lesquels il est nécessaire de convertir un ou plusieurs signaux analogiques en Un ou plusieurs signaux numériques aptes à être mémorisés dans une mémoire numérique et traités par un processeur numérique. Ces systèmes comprennent généralement un étage d'entrée constitué d'un ou plusieurs numériseurs et d'une mémoire pour les données numérisées ; le processeur accède le plus souvent à ladite mémoire via un bus. Dans les systèmes à basse fréquence, cette mémoire peut par exemple être constituée directement par la mémoire vive d'un ordinateur. Les données numérisées sont stockées dans cette mémoire et traitées, par exemple affichées, par le processeur de cet ordinateur soit en temps réel, soit ultérieurement, par exemple lorsque toutes les données ont été acquises.

On utilise de plus en plus souvent dans la technique électronique des signaux analogiques à très haute fréquence qui nécessitent des systèmes d'acquisition, par exemple des oscilloscopes, très rapides. On réalise actuellement des numériseurs qui travaillent avec une fréquence d'échantillonnage de plusieurs centaines de MHz, voire de l'ordre de 1GHz ou plus; il est à prévoir que ces limites actuelles vont être dépassées avec l'apparition de composants plus performants. Ces numériseurs permettent en vertu du principe de Nyquist de fournir une représentation numérique fidèle de signaux analogiques ayant une fréquence maximale de plusieurs centaines de MHz.

De nombreuses applications exigent cependant d'acquérir des signaux avec des fréquences encore plus importantes. Les performances et le coût des numériseurs représentent un obstacle pour la réalisation de systèmes d'acquisition ultrarapides. On connaît donc l'utilisation de systèmes comprenant deux numériseurs en parallèle. Les instants d'échantillonnage des numériseurs sont déphasés, en sorte que le premier numériseur fournit une suite d'échantillons d0, d2, d4, .. aux instants t0, t2, t4, .. tandis que l'autre numériseur fournit aux instants intermédiaires t1, t3, t5, .. une suite d'échantillons d1, d3, d5, .. déphasée d'une demi-période d'échantillonnage p. En combinant les deux suites d'échantillons, on obtient donc une suite d0, d1, d2, d3,.. représentant le signal analogique d'entrée échantillonné à une fréquence double de celle de chaque numériseur. Ce principe a également été appliqué à des systèmes comprenant 3, 4 ou même davantage de numériseurs afin d'augmenter encore la cadence du signal numérique échantillonné.

Les instants d'échantillonnage des deux numériseurs doivent être contrôlés avec précision afin d'obtenir le déphasage de p/2 requis. Toute déviation de la phase théoriquement requise conduit à des erreurs dans le signal numérisé, par exemple à l'introduction d'harmoniques absentes du signal original.

Un but de la présente invention est donc de proposer un circuit de conversion analogique-numérique amélioré par rapport aux circuits de l'art antérieur. En particulier, un but de la présente invention est de proposer un circuit de conversion comprenant une pluralité de numériseurs aptes à échantillonner et à numériser un signal d'entrée analogique à haute fréquence, les instants d'échantillonnage des différents numériseurs étant déphasés, le circuit comprenant des moyens de calibration améliorés du déphasage entre un premier numériseur et un deuxième numériseur.

Des circuits de calibration ont déjà été proposés dans l'art antérieur. Le brevet US4736189 par exemple décrit une méthode de calibration de phases d'échantillonnage utilisant un signal de calibration dont la fréquence est dérivée de l'horloge d'échantillonnage par des opérations complexes. En outre, cette méthode nécessite de choisir des points sur un signal pris comme référence qui se trouvent près du milieu d'une pente. Ceci exige donc soit un contrôle de la phase du signal de calibration, soit un choix particulier des valeurs digitales utilisées.

US4763105 décrit une autre méthode de calibration de numériseurs utilisant des opérations complexes, faisant notamment appel à des transformées de Fourier. Des moyens de traitement numériques onéreux sont donc nécessaires pour mettre en oeuvre cette méthode.

US4962380 décrit une autre méthode utilisant directement l'horloge d'échantillonnage pour la calibration. Cette méthode dépend de façon critique de la forme du signal de calibration, qui doit être rigoureusement sinusoïdale par exemple, ce qui est difficile à garantir. En outre, il est nécessaire d'ajuster non seulement les phases relatives, mais aussi la phase absolue du premier numériseur.

EP260375 décrit une méthode de calibration de convertisseurs analogiques-numériques dépendant d'un signal dont la fréquence doit correspondre exactement à la fréquence d'échantillonnage. Cette méthode est donc très difficile à appliquer lorsque le taux d'échantillonnage est très élevé.

Un but de la présente invention est donc de proposer une méthode et un circuit de calibration améliorés par rapport aux méthodes et aux circuits de l'art antérieur, en particulier un circuit et une méthode pouvant être mis en oeuvre de manière plus simple ou plus économique, ne nécessitant pas de moyens de calcul numériques complexes, et pouvant également être utilisés pour calibrer des numériseurs à très haute fréquence d'échantillonnage, par exemple des numériseurs utilisant une fréquence d'échantillonnage de l'ordre du GHz.

Ces buts sont atteints selon l'invention au moyen d'un circuit de conversion analogique-numérique pour système d'acquisition de données à haute fréquence, comprenant une pluralité de numériseurs aptes à échantillonner et à numériser un signal d'entrée analogique à haute fréquence, les instants d'échantillonnage des différents numériseurs étant déphasés, des moyens de calibration du déphasage entre un premier numériseur et un deuxième numériseur étant prévus, dans lequel lesdits moyens de calibration dudit déphasage déterminent ledit déphasage de manière à minimiser la différence entre une série de valeurs numériques déterminée par le premier numériseur et une série de valeurs numériques correspondantes déterminées par interpolation des valeurs fournies par le deuxième numériseur.

L'invention sera mieux comprise à l'aide de la description donnée à titre d'exemple et des figures qui montrent:

La figure 1 un diagramme temporel d'un signal w1 montrant en particulier les valeurs d0, d2, d4,.. obtenues par un premier numériseur aux instants t0, t2, t4,..

La figure 2 un diagramme temporel du signal w1 montrant en particulier les valeurs d1, d3, d5,.. obtenues par un deuxième numériseur aux instants t1, t3, t5,.. déphasés par rapport aux instants d'échantillonnage idéaux t1', t3', t5', ..

La figure 3 un diagramme temporel montrant en superposition le signal w1 ainsi qu'un signal w1' obtenu en plaçant les valeurs d1, d3, d5, .. du deuxième numériseur aux instants d'échantillonnages idéaux t1', t3', t5',

La figure 4 un diagramme temporel montrant en superposition le signal w1' ainsi qu'un signal w1" obtenu par déphasage de u du signal w1.

La figure 5 un circuit d'acquisition de données selon l'invention.

Bien que la méthode et le circuit de l'invention soient particulièrement destinés à être utilisée dans un oscilloscope, notamment dans un oscilloscope numérique à haute fréquence, ou dans un enregistreur transitoire, l'homme du métier comprendra que cette méthode et ce circuit peuvent également être utilisés dans tout système d'acquisition de données haute-fréquence.

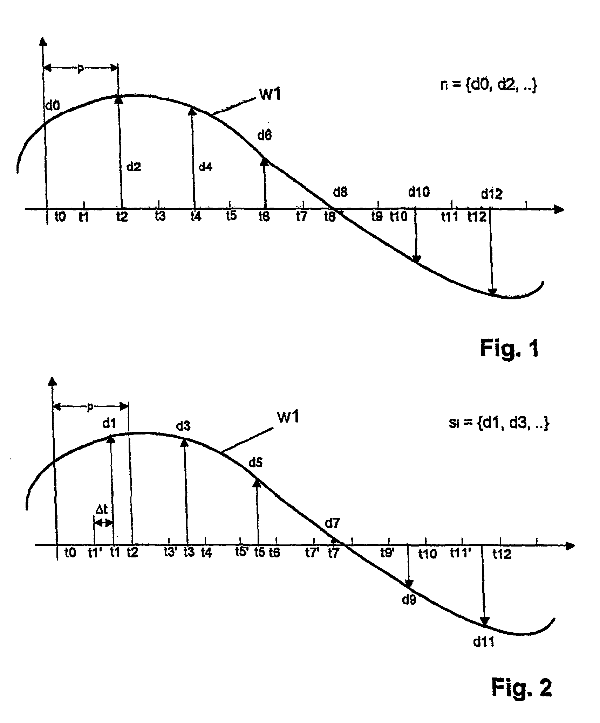

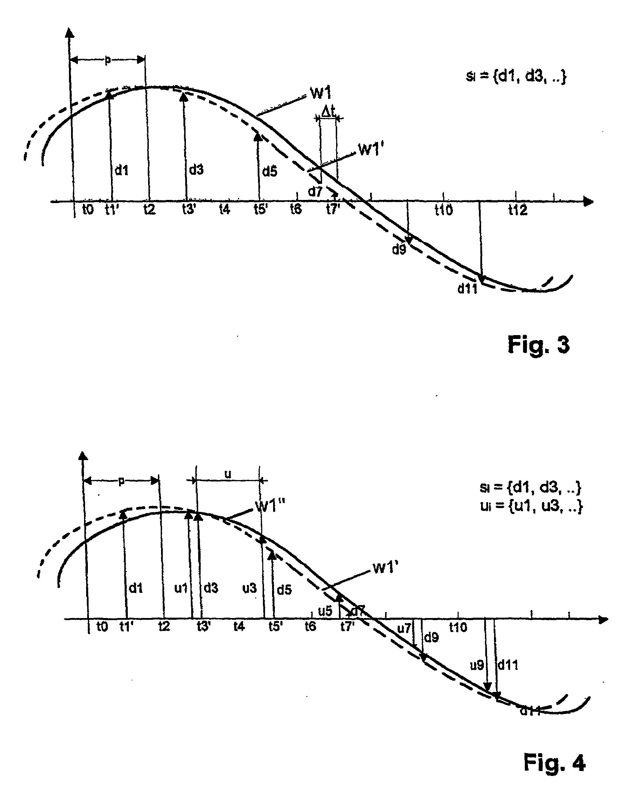

La figure 1 illustre un signal analogique w1 ainsi qu'une suite numérique $r_i = \{d0, d2, d4, ..\}$ produite par un numériseur 6 (illustré sur la figure 4) en échantillonnant w1 aux instants d'échantillonnages t0, t2, t4, .. espacés par une période d'échantillonnage p. De manière similaire, la figure 2 illustre le signal analogique w1 ainsi qu'une suite numérique $s_i = \{d1, d3, d5, ..\}$ produite par un numériseur 9 (figure 4) en échantillonnant w1 aux instants d'échantillonnages t1, t3, t5, .. espacés par la même période d'échantillonnage p. Les deux numériseurs 6, 9 utilisent donc une fréquence d'échantillonnage f=1/p. En entrelaçant les suites numériques $r_i$ et $s_i$ produites par les deux numériseurs, on obtient donc une suite numérique d0, d1, d2, d3, .. représentant le signal w1 échantillonné à une fréquence 2/p. De cette manière, il est possible de doubler la fréquence d'échantillonnage du signal w1.

Idéalement, les valeurs $s_i$ devraient être produites par le deuxième numériseur 9 en échantillonnant w1 à des instants idéaux t1', t3', t5' déphasés d'exactement une demi-période d'échantillonnage p par rapport aux instants d'échantillonnage t0, t2, t4, .. utilisés par le premier numériseur 6. En pratique, et particulièrement lorsque les fréquences d'échantillonnage sont très élevées, il est difficile de garantir un déphasage précis. On constate donc sur la figure 2 que les instants d'échantillonnage réels t1, t3, t5 sont déphasés d'une valeur Δt par rapport aux instants idéaux t1', t3', t5'. Les valeurs de $s_i$ sont donc différentes des valeurs de w1 aux instants d'échantillonnage idéaux t1', t3', t5'.

La figure 3 illustre en superposition le signal w1 ainsi que les valeurs $s_i$ produites par le deuxième numériseur 9 mais replacés aux instants théoriques t1', t3', t5', .. La courbe w1' correspond aux échantillons ainsi replacés; on constate qu'elle est déphasée de Δt par rapport à la courbe originale w1. La suite de valeurs numériques d0, d1, d2, d3, .. générée par les deux numériseurs 6, 9 correspond donc de manière imparfaite au signal analogique w1. Il est donc nécessaire de corriger le déphasage entre les signaux d'échantillonnage.

L'invention est basée sur la constatation que, en pratique, le déphasage Δt est approximativement constant et que la variation de Δt au cours du temps peut généralement être négligée. En outre, l'invention est basée notamment sur la constatation que le déphasage Δt entre les instants d'échantillonnage réels t1, t3, t5, .. et les instants d'échantillonnage idéaux t1', t3', t5' est égal au déphasage nécessaire à appliquer à la forme d'onde w1' pour qu'elle se superpose de manière optimale avec le signal d'entrée w1.

Si $r_i$ désigne la suite de valeurs numériques $\{d0, d2, d4, ..\}$ produite par le numériseur de référence 6 et $s_i$ la deuxième suite de valeurs $\{d1, d3, d5, ..\}$ produite par le deuxième numériseur 9, on peut définir une suite numérique déphasée $u_i$, illustrée sur la figure 4, et obtenue à partir de la deuxième suite $s_i$ par simple interpolation linéaire:

$$u_i(x) = s_i + x \cdot (s_i - s_{i-1})$$

où $x = u/p$ est une valeur entre 0 et 1 qui indique le déphasage en termes relatifs entre $u_i$ et $s_i$. La valeur u indique donc une correction de déphasage appliquée à la suite $s_i$.

Le déphasage entre numériseurs est minimal lorsque les courbes w1 et w1" se superposent de façon optimale, c'est-à-dire lorsque la distance entre $u_i$ et $r_i$ est minimale.

Il est donc nécessaire de choisir le déphasage relatif x de façon à ce que la somme L des carrés entre les points $r_i$ de w1 et les points $u_i$ obtenus par interpolation à partir de $s_i$ soit minimale:

$$L = \sum_i [r_i - u_i(x)]^2$$

La valeur optimale du déphasage x à appliquer au second numériseur 9 est donc obtenue en dérivant L par rapport à x, ce qui donne à l'aide d'opérations simples non détaillées ici la valeur de x suivante:

$$x = \frac{\sum_i (r_i - s_i) \cdot (s_i - s_{i-1})}{\sum_i (s_i - s_{i-1}) \cdot (s_i - s_{i-1})}$$

et donc, en terme absolu, une correction de déphasage u=px.

On notera que le calcul de u n'implique que des opérations arithmétiques simples pouvant être effectuées rapidement par un calculateur électronique simple.

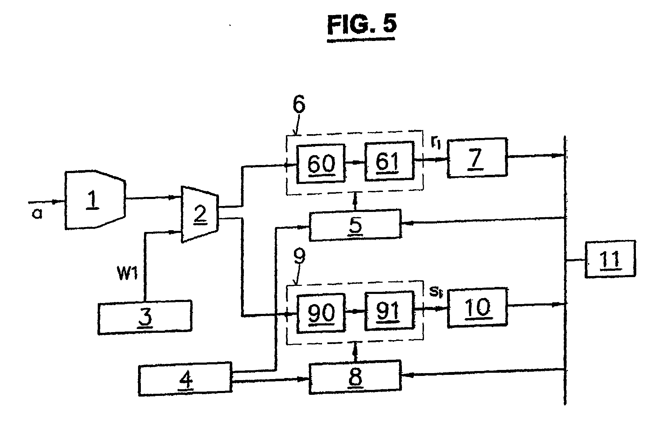

La figure 5 illustre un circuit d'acquisition de données selon l'invention. Le circuit comporte une entrée pour un signal analogique a à acquérir ainsi qu'un amplificateur 1 pour ce signal (optionnel). Un multiplexeur analogique 2 permet de choisir entre l'application du signal a amplifié ou l'introduction d'un signal de calibration w1 produit par un générateur de signal de calibration 3.

Le signal a ou w1 sélectionné par le multiplexeur 2 est appliqué à un premier numériseur 6 et à un deuxième numériseur 9. Les numériseurs 6, respectivement 9, comprennent un étage d'échantillonnage et de maintien 60, respectivement 90, et un convertisseur analogique-numérique 61, respectivement 91, à très haute fréquence.

Un générateur de signal d'échantillonnage 4, pouvant être implémenté sur un autre module ou sur une autre carte électronique, fournit à un module à retard programmable 5, respectivement 8, un signal d'échantillonnage de fréquence 1/p. Le retard imposé par les modules à retard 5, respectivement 8, est déterminé au moyen d'une valeur numérique fournie par un processeur numérique 11. Comme indiqué ci-dessus, on programmera des retards différents de façon à imposer un déphasage d'exactement p/2 entre les signaux à la sortie des deux modules à retard. Ces signaux sont appliqués comme signal d'échantillonnage aux numériseurs 6, respectivement 9.

Les suites de valeurs numériques $r_i$, resp. $s_i$, obtenues par les numériseurs 6, resp. 9, sont mémorisées dans une mémoire numérique 7, respectivement 10, accessible en lecture par le processeur numérique 11. Les mémoires 7, 10 peuvent être constituées par n'importe quel type de mémoire dynamique ou de préférence statique, sous la forme d'un ou plusieurs modules discrets organisés selon n'importe quel schéma approprié. Dans une variante préférentielle de l'invention, les mémoires sont à double accès, permettant au système de traitement numérique 11 d'accéder aux données mémorisées pendant l'écriture de nouvelles données.

Le déphasage entre les deux numériseurs 6, 9 dans le système d'acquisition peut être calibré par la méthode suivante:

- au cours d'une opération de calibration, par exemple à la mise sous tension du circuit, génération d'un signal de calibration w1 par le générateur 3 et sélection de ce signal par le multiplexeur 2,

- numérisation de w1 par les deux numériseurs 6, 9 aux instants d'échantillonnage définis par les modules à retard 5, 8 et obtention d'une suite $r_i$ de n valeurs numériques générées par le premier numériseur 6 et d'une autre suite $s_i$ générée par le deuxième numériseur 9,

- mémorisation des suites $r_i$, $s_i$ dans les mémoires 6, 9,

- accès auxdites mémoires par le processeur 11 et calcul de la valeur de la correction de déphasage u calculée selon la formule vue plus haut,

- correction du déphasage appliqué par le module à retard 8 au moyen de la valeur de correction de déphasage u ainsi calculée.

La méthode de l'invention peut être appliquée avec pratiquement n'importe quel type de signal w1, sujet à quelques conditions peu contraignantes:

- il doit présenter des pentes raisonnablement symétriques;

- le nombre de valeurs numérisées (typiquement 1000 à 10000) devrait englober au moins une dizaine de périodes du signal de calibration, ce qui constitue une limite inférieure à la fréquence dudit signal;

- la fréquence du signal de calibration w1 ne devrait pas dépasser 10% de la fréquence d'échantillonnage .

L'homme du métier comprendra que l'invention peut aussi être utilisée pour calibrer le déphasage dans des systèmes d'acquisition comprenant plus de deux numériseurs, par une adaptation simple de la formule de calcul de u ci-dessus. Le calibrage peut par exemple être effectué en calibrant tour à tour chacun des numériseurs par rapport à un numériseur choisi comme référence, ou en une seule opération en calculant les erreurs de déphasage sur tous les numériseurs.

Le calcul de u peut avantageusement être effectué par un programme adapté exécuté par le processeur 11; cette opération étant effectuée seulement au cours de la calibration, les contraintes de vitesse de calcul ne sont pas critiques. Le programme sera avantageusement mémorisé sur un support de donnée informatique apte à être lu par le processeur numérique 11 dans le système d'acquisition de données pour lui faire exécuter la méthode de l'invention. Il est cependant aussi possible de prévoir un circuit spécifique, par exemple un ASIC ou un FPGA, pour effectuer ce calcul sans solliciter le processeur 11.

**Revendications**

**1.** Circuit de conversion analogique-numérique pour système d'acquisition de données à haute fréquence, comprenant :

une pluralité de numériseurs (6, 9) aptes à échantillonner et à numériser un signal d'entrée analogique (a; w1) à haute fréquence, les instants d'échantillonnage des différents numériseurs étant déphasés,

un circuit de calibration (3,4,5,8,11) du déphasage entre un premier numériseur et un deuxième numériseur,

**caractérisé en ce que** ledit circuit de calibration (3,4,5,8,11) dudit déphasage détermine une valeur de correction de déphasage (par example u = p·x) choisie de façon à ce que la distance entre une série de valeurs numériques $(r_i)$ déterminées par le premier numériseur (6) et une série de valeurs numériques correspondantes ( par exemple $u_i(x) = s_i + x(s_i - s_{i-1})$) déterminées par interpolation aux instants d'échantillonnage du premier numériseur (6) à partir des valeurs numériques $(s_i)$ fournies par le deuxième numériseur (9) soit minimale.

**2.** Circuit selon la revendication précédente, **caractérisé en ce que** ladite correction de déphasage (u) est déterminée selon la formule suivante :

$$u = p \cdot \frac{\sum_i (r_i - s_i) \cdot (s_i - s_{i-1})}{\sum_i (s_{i-1} - s_{i-1}) \cdot (s_i - s_{i-1})}$$

dans laquelle p représente la période d'échantillonnage, $r_i$ représente la valeur fournie par le premier numériseur (6) à l'instant i et $s_i$ la valeur fournie par le deuxième numériseur (9) à l'instant d'échantillonnage correspondant.

**3.** Circuit selon l'une des revendications 1 ou 2, **caractérisé par** un générateur (3) de signal de calibration apte à générer un signal de calibration (w1) pour lesdits numériseurs (6, 9) lors de ladite calibration de déphasage.

**4.** Circuit selon l'une des revendications précédentes, **caractérisé en ce qu'**il comprend un seul générateur de signal d'échantillonnage (4) commandant ladite pluralité de numériseurs (6, 9) au travers de délais programmables (5, 8).

**5.** Circuit selon la revendication précédente, **caractérisé par** un processeur numérique (11) destiné à traiter les valeurs numériques $(r_i, s_i)$ fournies par ladite pluralité de numériseurs au cours de ladite calibration pour déterminer la ou lesdites valeurs de correction de déphasage (u) et commander lesdits délais programmables (5, 8).

**6.** Circuit selon l'une des revendications précédentes, **caractérisé par** une mémoire de stockage (7, 10) pour mémoriser lesdites valeurs numériques $(r_i, s_i)$ fournies par chaque numériseur (6, 9).

**7.** Méthode de calibration du déphasage entre un premier numériseur (6) et un deuxième numériseur (9) dans un système d'acquisition de mesure comportant une pluralité de numériseurs aptes à échantillonner et à numériser un signal d'entrée analogique (a; w1) à haute fréquence, les instants d'échantillonnage (t0, t1, t2, ..) des différents numériseurs étant déphasés,

**caractérisée en ce que** le déphasage (par exemple u = p·x) est déterminé de façon à ce que la distance entre une série de valeurs numériques $(r_i)$ déterminées par le premier numériseur (6) et une série de valeurs numériques correspondantes (par exemple $U_i(x) = S_i + x(S_i - S_{i-1})$) déterminées par interpolation aux instants d'échantillonnage du premier numériseur (6) à partir des valeurs numériques $(s_i)$ fournies par le deuxième numériseur (9) soit minimale.

**8.** Méthode selon la revendication précédente, **caractérisée en ce qu'**une correction de déphasage (u) est appliquée au signal d'échantillonnage appliqué sur le deuxième numériseur, ladite correction u étant calculée selon la formule suivante :

$$u = p \cdot \frac{\sum_i (r_i - s_i) \cdot (s_i - s_{i-1})}{\sum_i (s_i - s_{i-1}) \cdot (s_i - s_{i-1})}$$

dans laquelle p représente la période d'échantillonnage, $r_i$ représente la valeur fournie par le premier numériseur (6) à l'instant i et $s_i$ la valeur fournie par le deuxième numériseur (9) à l'instant d'échantillonnage correspondant.

**9.** Méthode selon la revendication 8, **caractérisée en ce qu'**un signal de calibration (w1) est généré par un générateur de signal de calibration (3) lors de ladite calibration de déphasage.

**10.** Méthode selon l'une des revendications 8 à 9, **caractérisée en ce qu'**elle est appliquée par un processeur numérique (11) destiné à traiter les données numériques ($r_i$, $s_i$) fournies par ladite pluralité de numériseurs (6, 9) pour déterminer la ou lesdites valeurs de correction de déphasage (u).

**11.** Méthode selon l'une des revendications 7 à 10, **caractérisée en ce que** les valeurs fournies par chaque numériseur (6, 9) sont stockées dans une mémoire de stockage (7, 10).

**12.** Support de données apte à être lu par un processeur numérique (11) dans un système d'acquisition de données pour lui faire exécuter la méthode de l'une des revendications 7 à 11.

**Claims**

**1.** Analog-to-digital conversion circuit for high-frequency data acquisition system, comprising:

a plurality of digitizers (6, 9) capable of sampling and digitizing a high-frequency analog input signal (a; w1), the sampling times of the different digitizers being phase-shifted,

a circuit (3,4,5,8,11) for calibrating the phase shift between a first digitizer and a second digitizer,

**characterized in that** said circuit (3,4,5,8,11) for calibrating said phase shift determines a phase shift correction value (for example u = p·x) chosen so that the distance between a sequence of digital values ($r_i$) determined by the first digitizer (6), and a sequence of corresponding digital values (for example $u_i(x) = s_i + x(s_i - s_{i-1})$) determined by interpolating at the sampling times of the first digitizer (6) from the digital values ($s_i$) supplied by the second digitizer (9), is minimal.

**2.** Circuit according to the preceding claim, **characterized in that** said phase shift correction (u) is determined according to the following equation:

$$u = p \cdot \frac{\sum_i (r_i - s_i) \cdot (s_i - s_{i-1})}{\sum_i (s_i - s_{i-1}) \cdot (s_i - s_{i-1})}$$

wherein p represents the sampling period, $r_i$ represents the value supplied by the first digitizer (6) at the time i and $s_i$ the value supplied by the second digitizer (9) at the corresponding sampling time.

**3.** Circuit according to one of the claims 1 or 2, **characterized by** a calibration signal generator (3) capable of generating a calibration signal (w1) for said digitizers (6, 9) during said phase shift calibration.

**4.** Circuit according to one of the preceding claims, **characterized in that** it comprises a single sampling signal generator (4) controlling said plurality of digitizers (6, 9) through programmable delays (5, 8).

**5.** Circuit according to the preceding claim, **characterized by** a digital processor (11) designed to process the digital values ($r_i$, $s_i$) supplied by said plurality of digitizers during said calibration process to determine the phase shift correction value or values (u) and to control said programmable delays (5, 8).

**6.** Circuit according to one of the preceding claims, **characterized by** a storage memory (7, 10) for storing said digital values ($r_i$, $s_i$) supplied by each digitizer (6, 9).

**7.** Method for calibrating the phase shift between a first digitizer (6) and a second digitizer (9) in a measurement acquisition system comprising a plurality of digitizers capable of sampling and digitizing a high-frequency analog input signal (a; w1), the sampling times (t0, t1, t2, ...) of the different digitizers being phase-shifted,

**characterized in that** the phase shift (for example u = p·x) is determined so that the distance between a sequence of digital values ($r_i$) determined by the first digitizer (6), and a sequence of corresponding digital values (for example $u_i(x)=s_i+x(s_i-s_{i-1})$) determined by interpolating at the sampling times of the first digitizer (6) from the digital values ($s_i$) supplied by the second digitizer (9), is minimal.

8. Method according to the preceding claim, **characterized in that** a phase shift correction (u) is applied to the sampling signal applied on the second digitizer, said correction u being determined according to the following equation:

$$u = p \cdot \frac{\sum_i (r_i - s_i) \cdot (s_i - s_{i-1})}{\sum_i (s_i - s_{i-1}) \cdot (s_i - s_{i-1})}$$

wherein p represents the sampling period, $r_i$ represents the value supplied by the first digitizer (6) at the time i and $s_i$ the value supplied by the second digitizer (9) at the corresponding sampling time.

9. Method according to claim 8, **characterized in that** a calibration signal (w1) is generated by a calibration signal generator (3) during said phase shift calibration.

10. Method according to one of the claims 8 to 9, **characterized in that** it is applied by a digital processor (11) designed to process the digital values ($r_i$, $s_i$) supplied by said plurality of digitizers (6, 9) for determining said phase shift correction value or values (u).

11. Method according to one of the claims 7 to 10, **characterized in that** the values supplied by each digitizer (6, 9) are stored in a storage memory (7, 10).

12. Data carrier capable of being read by a digital processor (11) in a data acquisition system to have it execute the method of one of the claims 7 to 11.

**Patentansprüche**

1. Analog-Digital-Konvertierungsschaltkreis für Hochfrequenzdatenerfassungssystem, beinhaltend:

eine Vielzahl von Digitalisierern (6, 9), welche geeignet sind, ein Hochfrequenz-Analog-Eingangssignal (a;w1) abzutatsten und zu digitalisieren, wobei die Abtastemomente der verschiedenen Digitalisierer phasenverschoben sind,

einen Kalibrierungsschaltkreis (3,4,5,8,11) der Phasenverschiebung zwischen einem ersten Digitalisierer und einem zweiten Digitalisierer,

**dadurch gekennzeichnet, dass** besagter Kalibrierungsschaltkreis (3,4,5,8,11) der besagten Phasenverschiebung einen Korrekturwert der Phasenverschiebung (zum Beispiel u = p·x) bestimmt, der so gewählt wird, dass die Distanz zwischen einer vom ersten Digitalisierer (6) bestimmten Serie von digitalen Werten ($r_i$) und einer Serie von entsprechenden digitalen Werten (zum Beispiel $u_i(x)=s_i+x(s_i-s_{i-1})$), welche durch Interpolation bei den Abtastemomenten des ersten Digitalisierers (6) aufgrund der vom zweiten Digitalisierer (9) gelieferten digitalen Werte($s_i$) bestimmt werden, minimal ist.

2. Schaltkreis gemäss dem vorhergehenden Anspruch, **dadurch gekennzeichnet, dass** die besagte Korrektur der Phasenverschiebung (u) gemäss folgender Formel bestimmt wird:

$$u = p \cdot \frac{\sum_i (r_i - s_i) \cdot (s_i - s_{i-1})}{\sum_i (s_i - s_{i-1}) \cdot (s_i - s_{i-1})}$$

worin p die Abtatsteperiode darstellt, $r_i$ den vom ersten Digitalisierer (6) zum Zeitpunkt i gelieferten Wert darstellt und $s_i$ den vom zweiten Digitalisierer (9) zum entsprechenden Abtatstezeitpunkt gelieferten Wert darstellt.

3. Schaltkreis gemäss einem der Ansprüche 1 oder 2, **gekennzeichnet durch** einen Kalibrierungssignalgenerator (3), welcher geeignet ist, ein Kalibrierungssignal (w1) für die besagten Digitalisierer (6, 9) während besagter Kalibrierung der Phasenverschiebung zu erzeugen.

4. Schaltkreis gemäss einem der vorhergehenden Ansprüche, **dadurch gekennzeichnet, dass** er einen einzigen Abtastesignalgenerator (4) enthält, welcher die besagte Vielzahl von Digitalisierern (6, 9) durch programmierbare Verzögerungen (5, 8) steuert.

5. Schaltkreis gemäss dem vorhergehenden Anspruch, **gekennzeichnet durch** einen Digitalprozessor (11), welcher geeignet ist, die von der besagten Vielzahl von Digitalisierern während besagter Kalibrierung gelieferten digitalen Werte($r_i$, $s_i$) zu verarbeiten, um den oder die besagten Korrekturwerte der Phasenverschiebung (u) zu bestimmen und die besagten programmierbaren Verzögerungen (5, 8) zu steuern.

6. Schaltkreis gemäss einem der vorhergehenden Ansprüche, **gekennzeichnet durch** einen Speicherungsspeicher (7, 10), um die besagten von jedem Digitalisierer (6, 9) gelieferten digitalen Werte($r_i$, $s_i$) zu speichern.

7. Methode zur Kalibrierung der Phasenverschiebung zwischen einem ersten Digitalisierer (6) und einem zweiten Digitalisierer (9) in einem Messdatenerfassungssystem, beinhaltend eine Vielzahl von Digitalisierern, welche geeignet sind, ein Hochfrequenz-Analog-Eingangssignal (a;w1) abzutatsten und zu digitalisieren, wobei die Abtastemomente (t0, t1, t2, ..) der verschiedenen Digitalisierer phasenverschoben sind,

 **dadurch gekennzeichnet, dass** die Phasenverschiebung (zum Beispiel u = p·x) so bestimmt wird, dass die Distanz zwischen einer vom ersten Digitalisierer (6) bestimmten Serie von digitalen Werten ($r_i$) und einer Serie von entsprechenden digitalen Werten (zum Beispiel $u_i(x)=s_i+x(s_i s_{i-1})$), welche durch Interpolation bei den Abtastemomenten des ersten Digitalisierers (6) aufgrund der vom zweiten Digitalisierer (9) gelieferten digitalen Werte ($s_i$) bestimmt werden, minimal ist.

8. Methode gemäss dem vorhergehenden Anspruch, **dadurch gekennzeichnet, dass** die Korrektur der Phasenverschiebung (u) auf das Abtatstesignal, das auf dem zweiten Digitalisierer angewandt wird, durchgeführt wird, wobei die besagte Korrektur u gemäss folgender Formel berechnet wird:

$$u = p \cdot \frac{\sum_i (r_i - s_i) \cdot (s_i - s_{i-1})}{\sum_i (s_i - s_{i-1}) \cdot (s_i - s_{i-1})}$$

 worin p die Abtasteperiode darstellt, $r_i$ den vom ersten Digitalisierer (6) zum Zeitpunkt i gelieferten Wert darstellt und $s_i$ den vom zweiten Digitalisierer (9) zum entsprechenden Abtastezeitpunkt gelieferten Wert darstellt.

9. Methode gemäss dem Anspruch 8, **dadurch gekennzeichnet, dass** ein Kalibrierungssignal (w1) von einem Kalibrierungssignalgenerator (3) während besagter Kalibrierung der Phasenverschiebung erzeugt wird.

10. Methode gemäss einem der Ansprüche 8 oder 9, **dadurch gekennzeichnet, dass** sie von einem Digitalprozessor (11) angewandt wird, der geeignet ist, die von der besagten Vielzahl von Digitalisierern (6, 9) gelieferten digitalen Daten ($r_i$, $s_i$) zu verarbeiten, um den oder die besagten Korrekturwerte der Phasenverschiebung (u) zu bestimmen.

11. Methode gemäss einem der Ansprüche 7 bis 10, **dadurch gekennzeichnet, dass** die von jedem Digitalisierer (6, 9) gelieferten Werte in einem Speicherungsspeicher (7, 10) gespeichert werden.

12. Datenträger, welcher von einem Digitalprozessor (11) in einem Datenerfassungssystem gelesen werden kann, um die Methode eines der Ansprüche 7 bis 11 von ihm durchführen zu lassen.

$n = \{d0, d2, ..\}$

**Fig. 1**

$s_l = \{d1, d3, ..\}$

**Fig. 2**

$s_l = \{d1, d3, ..\}$

**Fig. 3**

$s_l = \{d1, d3, ..\}$
$u_l = \{u1, u3, ..\}$

**Fig. 4**

## FIG. 5

EP 1 080 433 B1